Europäisches Patentamt

European Patent Office

Office européen des brevets

(11) Veröffentlichungsnummer: **0 084 680**
**B1**

(12) **EUROPÄISCHE PATENTSCHRIFT**

(45) Veröffentlichungstag der Patentschrift:
19.03.86

(51) Int. Cl.⁴: **A 01 F 15/14**

(21) Anmeldenummer: 82112057.3

(22) Anmeldetag: 28.12.82

(54) Vorrichtung zum Umschnüren von Ballen in einer Ballenpresse.

(30) Priorität: 25.01.82 DE 3202183
21.12.82 DE 3247147

(43) Veröffentlichungstag der Anmeldung:
03.08.83 Patentblatt 83/31

(45) Bekanntmachung des Hinweises auf die Patenterteilung:
19.03.86 Patentblatt 86/12

(84) Benannte Vertragsstaaten:
DE FR GB IT NL SE

(56) Entgegenhaltungen:
FR - A - 2 394 977
US - A - 2 742 062
US - A - 2 757 600

(73) Patentinhaber: Lindemann Maschinenfabrik GmbH,
Erkrather Strasse 401, D-4000 Düsseldorf 1 (DE)

(72) Erfinder: Probst, Karl, Ehrenstrasse 46, D-5650 Solingen
(DE)
Erfinder: Hüfken, Kurt, Vluynerplatz 20, D-4150 Krefeld
(DE)
Erfinder: Goricanec, Zvonko, Stettiner Strasse 10,
D-4000 Düsseldorf 13 (DE)

(74) Vertreter: Bergen, Klaus, Dipl.-Ing. et al, Patentanwälte
Dr.-Ing. Reimar König Dipl.-Ing. Klaus Bergen
Wilhelm-Tell-Strasse 14 Postfach 260162,
D-4000 Düsseldorf 1 (DE)

**Beschreibung**

Die Erfindung betrifft eine Vorrichtung zum Umschnüren von Ballen, die im Preßkanal einer Ballenpresse mittels eines Preßstempels hergestellt und in mindestens eine von zwei Drahtvorratsrollen gespeiste Drahtschlinge gepreßt werden, wobei eine Vorratsrolle einen Oberdraht liefert, der über zwei beiderseits eines Verschnürkopfes gelagerte Umlenkrollen läuft, während die andere Vorratsrolle einen Unterdraht liefert, der mit dem Oberdraht verbunden ist und bleibt, mit einer Schnürnadel, deren Bahn den Preßkanal durchdringt und den Unterdraht hinter dem fertigen Ballen als Drahtschleife hochzieht, wobei der Verschnürkopf ein Drillwerkzeug zum Erzeugen zweier hintereinander liegender Drillstellen aus dem Oberdraht und dem diesen benachbarten Draht der Drahtschleife und eine Trennvorrichtung zum Durchtrennen der Drähte zwischen den beiden Drillstellen aufweist.

In der Praxis wird der Ballen durch mehrere parallele Drahtschlingen zusammengehalten; bei der folgenden Beschreibung wird jedoch der Deutlichkeit wegen immer nur auf eine Umschlingungsebene bezug genommen.

Eine Vorrichtung der eingangs beschriebenen Art wird in der DE-OS 24 19 151 beschrieben. Sie weist ober- und unterhalb des Preßkanals je eine Drahtspule auf. Die Enden der von den Spulen kommenden Drähte sind vom vorherigen Arbeitszyklus her miteinander verdrillt, wobei der Unterdraht von seiner Vorratsspule um die Vorderseite des in Bildung befindlichen Ballens zur Verbindungsstelle läuft und durch eine in der Nähe der dem Preßstempel zugekehrten Ballenkante angeordnete Umlenkrolle zunächst dicht oberhalb des Preß-kanals geführt wird. Nach dem Hochziehen des Unterdrahts in einer offenen Schlaufe fährt die Drill- und Trennvorrichtung (im weiteren Drillvorrichtung) in Arbeitsstellung und nimmt dabei zunächst den Oberdraht und dann den nächstgelegenen Abschnitt der offenen Schlaufe in das Drillrad auf, worauf das Verdrillen und anschließende Durchtrennen erfolgt.

Diese Vorrichtung arbeitet zwar funktionssicher, jedoch liegt dort die die Umschnürung abschließende Drillstelle unmittelbar auf oder zumindest nahe der Oberkante der hinteren Stirnfläche des fertigen Ballens. Derartig seitlich vom Ballen abstehende Drillstellen bilden insbesondere mit ihren scharfkantigen Enden beim Manipulieren der Ballen eine erhebliche Verletzungsgefahr für das Verladepersonal. Versuche, die Drillstellen so umzubiegen, daß sie bleibend in der Ballenoberfläche verschwinden, zeigten keinen Erfolg, weil sie sich durch Anhaken an Teilen der Ballenpresse oder auch unter Einwirkung der Ballenexpansion wieder aufrichteten.

Der Erfindung liegt danach die Aufgabe zugrunde, eine Vorrichtung zu schaffen, mit der Ballen derart umschnürt werden können, daß die die Umschnürung abschließende Drillstelle mit Sicherheit nicht mehr über die in Preß-richtung gesehen hintere Ballenkante hinausragt.

Erfindungsgemäß wird dies bei einer Vorrichtung der eingangs genannten Art dadurch erreicht, daß der Abstand zwischen der unteren Umlenkrolle und der durch die Preß-endstellung des Preßstempels gelegten Vertikalebene mindestens gleich dem Abstand zwischen der unteren Umlenkrolle und der Trennvorrichtung ist und mindestens ein Fangfinger quer auf die von der Schnürnadel und zwischen den Umlenkrollen gespannt gehaltenen Drähte zwecks Zusammenführung der im Drillwerkzeug miteinander zu verdrillenden Drähte einwirkt.

Durch diese Maßnahmen wird erreicht, daß die die Umschnürung abschließende Drillstelle mendestens in einer ihrer Länge entsprechenden Entfernung von der Oberkante der hinteren Ballenstirnfläche erzeugt wird, so daß sie auch in einem in Richtung auf die hintere Ballenstirnfläche umgebogenen Zustand Über letztere nicht hinausragen kann. Die Gefahr der Verletzung umstehender Personen durch die Scharfkantigen Drillstellen ist damit bei der Manipulation der Ballen mittels Gabelstapler oder Kran völlig beseitigt.

Innerbetriebliche Versuche mit unter Verwendung der erfindungsgemäßen Vorrichtung verschnürten Ballen haben gezeigt, daß es nicht störend oder gefährlich ist, wenn die Enden der Drillstellen senkrecht aus der oberen Deckfläche der Ballen hervorstehen, weil sie üblichen Übereinanderstpeln der Ballen verdeckt werden. Durch Ausrüstung der erfin-dungsgemäßen Vorrichtung mit je einer Abbiegevorrichtung vor und hinter der Schneidvorrichtung entsprechend einer besonderen Ausgestaltungsform ist es jedoch in einfacher Weise möglich, die Drillstellen auch noch derart umzubiegen, daß ihre scharfen Enden zur Ballenoberfläche zeigen oder sogar in dieser verschwinden. Der Hauptzweck des Umbiegens der Drillstellen im Zusammenhang mit der Erfindung besteht jedoch darin, daß dadurch die Festigkeit der Drillstellen tatsächlich erhört wird.

Wesentlich für die erfindungsgemäße Vorrichtung ist jedoch vor allem, daß durch die die Beendigung des Umschnürvorganges bewirkende Bildung der in der Nähe der hinteren ballenoberkante gelegenen Schnürstelle in einem solchen Abstand von der Kante erfolgt, daß ein Überstehen der Drillstellenenden mit Sicherheit vermieden wird. Dies sicherstellende Ausgestaltungsformen der Erfindung ergeben sich aus den Ansprüchen.

So kann der Fangfinger als Hebel ausgebildet werden, der beispielsweise auf derselben Drehachse wie die obere Umlenkrolle für den Oberdraht schwenkbar gelagert und mit einem Schwenkantrieb verbunden sein kann. Das freie Ende des Hebels ist vorteilhaft gabelförmig geöffnet und auf einer Außenseite mit einer Anlaufschräge zur Führung des einzufangenden Drahtabschnitts versehen.

In einer weiteren Variationsform ist die Spitze des Fangfingers nach Art eines Widerhakens ausgebildet, und der Fangfinger führt zum Heranholen des nächstgelegenen Teils der offenen Drahtschlaufe eine einfache Hin- und Herbewegung aus.

Durch die vorzugsweise vorgesehene Anordnung der unteren Umlenkrolle knapp oberhalb der Oberseite des gerade zu verpressenden und zu verschnürenden Ballens wird der Vorteil erreicht, daß die dann später erstellte Drillstelle bei Weiterbewegen dieses Ballens, nämlich während des Pressens eines neuen Ballens unter dieser Umlenkrolle in Kontakt zu dieser hindurchgeschoben wird, was dazu führt, daß diese Drillstelle dann in Richtung auf die Ballenoberfläche umgebogen oder gar in diese hineingedrückt wird, was einen zusätzlichen Vorteil im Hinblick auf das Vermeiden der Verletzungsgefahr und des Verhakens mit anderen Ballen bedeutet.

Auch hat es sich als vorteilhaft erwiesen, den Verschnürkopf derart anzuordnen, daß er für den Verschnürvorgang in Arbeitsstellung gefahren und anschließend in eine Stellung außerhalb des Verlaufs des Oberdrahts bewegt wird.

Die der Erfindung zugrundeliegende Aufgabe läßt sich auf der Basis des dem Hauptanspruch zu entnehmenden Erfindungsgedankens in einer weiteren Ausführungsform vorteilhaft dadurch lösen, daß einer Drillstelle jeweils zwei Fangfinger als Fangfingerpaar mit Drillwerkzeugfunktion zugeordnet werden; dabei wirken die Fangfinger vorzugsweise mit Klemmbacken zusammen, so daß hier eine Baugruppe geschaffen wird, die als besonderes Element die mehrere Funktionen erfüllenden Fangfinger enthält. Die vorzugsweise Ausgestaltung dieser Fangfinger und damit insgesamt des in dieser Ausführungsform als kompakte Einheit gestalteten Schnürkopfes geht aus den weiteren Unteransprüchen hervor.

Die zuvor erwähnten, mit den Fangfingern zusammenwirkenden Klemmbacken, insbesondere in der direkten Zuordnung zu den besonders gestalteten, hakenförmigen Fangfingerenden führen in vorteilhafter Weise zum Umbiegen der Drahtenden, wodurch nicht nur die Festigkeit der Drillstelle erhöht sondern auch in der überwiegenden Zahl der Fälle sich der Vorteil einstellt, daß die scharfen Enden zur Ballenoberfläche zeigen, d.h. auch ohne ihr Eintauchen in die Ballenoberfläche zumindest hinsichtlich Verletzungsgefahr eine zusätzliche Vorsorge getroffen ist.

Zwar wird die Verletzungsgefahr an offenen Drillstellen zum Teil bereits durch Vorrichtungen gemäß der DE-AS 21 11 894 sowie der DE-PS 24 60 464 gemildert, indem mit Hilfe zweier parallel zueinander angeordneter Drillhaken geschlossene Drahtschlaufen gebildet werden, jedoch bedeutet dies über das Jahr gesehen einen ganz erheblichen zusätzlichen Drahtbedarf und auch in der weiteren Gestaltung der daraus bekannten Drillvorrichtungen zusätzliche, aufwendige konstruktive Maßnahmen. Nach wie vor liegen die mit diesen bekannten Vorrichtungen hergestellten Drillstellen auf der hinteren Oberkante des Ballens und stellen mit den Drahtenden der auch dort vorhandenen Schnittstelle eine Verletzungsgefahr dar.

Im einzelnen ist unter Hinweis auf die Unteransprüche zur zweiten Ausführungsform noch folgendes zu bemerken:

Während das die Fangfinger führende Joch nur einen geringen Bewegungsspielraum benötigt, müssen die Fangfinger in ihrer Fangstellung hinter den nächstgelegenen Drahtabschnitt der durch die Schnürnadel hochgeholten Drahtschleife reichen. Aus diesem Grund wird für die Fangfingerpaare ein eigener Antrieb vorgesehen, der sie aus der Grundstellung in die Fangstellung und zurück bewegt. Das Joch dient jedoch nicht nur zur Führung der Fangfinger und ihrer Lagerung für den Drillvorgang, sondern wirkt - wie bereits erwähnt - mit den Fanghaken auch beim Schneid- und Klemmvorgang zusammen. Hierzu ist am Joch für jeden Fanghaken eine Klemmbacke fest installiert und außerdem etwa in der Mitte zwischen den beiden Fangfingerachsen die mit einer an einer der Klemmbacken befestigten Gegenklinge zusammenwirkende Schneidklinge angebracht. Zwar ist es möglich, den Klemm- und Schneidvorgang mit Hilfe des Verschiebeantriebs für die Fangfinger derart durchzuführen, daß beim Erreichen der Grundstellung die Fanghaken so gegen das arretierte Joch gepreßt werden, daß das Durchtrennen der Drähte und ein genügend starkes Klemmen erzielt wird; die Klemmbacken setzen dabei im Grund des Fanghakenmauls oder bei Vorhandensein zylindrischer Rollen auf diesen bzw. auf den von diesen geführten Drähten auf. Vorteilhaft kann es aber sein, wenn nach dem Verbringen des Verschnürkopfes in die Grundstellung ein lediglich am Joch angreifender Klemm- und Schneidantrieb das Joch und damit die Schneidklinge und die beiden Klemmbacken gegen die beiden festgelegten Fanghaken drückt. Während des Ablaufs des Fangvorgangs ebenso wie beim Klemm- und Schneidvorgang muß durch entsprechende an sich bekannte Vorkehrungen beim Drillantrieb dafür gesorgt werden, daß die Lage der Fanghaken in bezug auf die mit diesen zusammenwirkenden Teile eindeutig festgelegt ist. In seiner Grundstellung befindet sich der Verschnürkopf ebenso außerhalb des Verlaufs des Oberdrahtes wie in der Fangstellung, in der sich nur die Fanghaken der Fangfinger über den Verschnürkopf hinaus bewegen.

Anhand der in der beiliegenden Zeichnung dargestellten Ausführungsformen wird die Erfindung näher erläutert. Es zeigen:

Fig. 1 eine schematische Seitenansicht einer Ballenpresse mit einer ersten Ausführungsform eines Verschnürkopfes mit Fangfinger;

Fig. 2 den Verschnürkopf gemäß Fig. 1 in vergrößerter Seitenansicht, jedoch nach beendetem Drillvorgang;

Fig. 3 das freie Ende des ala Hebel ausgebildeten Fangfingers, in Seitenansicht;

Fig. 4 den Fangfinger gemäß Fig. 3, in Draufsicht;

Fig. 5 eine schematische Seitenansicht einer Ballenpresse mit einer zweiten Ausführungsform des Verschnürkopfes in Grundstellung;

Fig. 6 eine Darstellung gemäß Fig. 5, jedoch mit dem Verschnürkopf in Fangstellung;

Fig. 7 die gleiche Darstellung wie Fig. 5 und 6 jedoch mit dem Verschnürkopf in Drillstellung;

Fig. 8 eine schematische Draufsicht mit vier nebeneinander angeordneten Verschnürköpfen;

Fig. 9 einen Schnitt durch einen erfindungsgemäßen Verschnürkopf; und

Fig. 10 einen Fanghaken am Kopf eines Fangfingers.

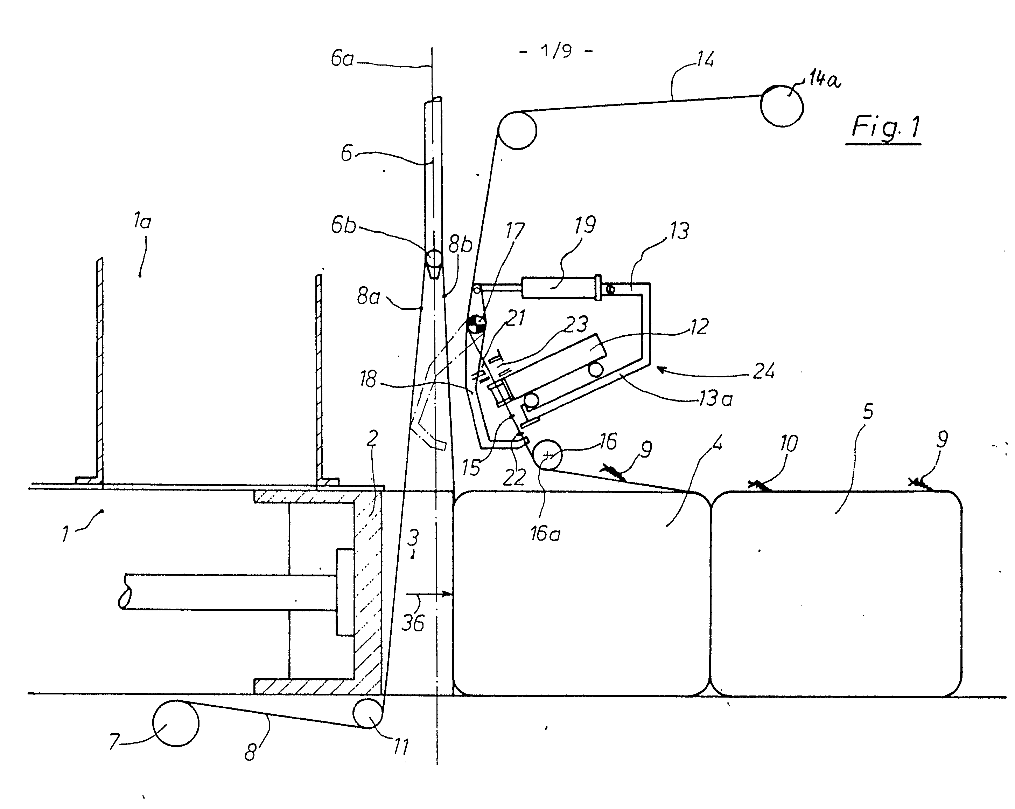

In einem Preßkasten 1 mit rechteckigem querschnitt ist ein Preßstempel 2 mit stirnseitigen Schnürnuten 3 mittels eines nicht dargestellten Antriebs hin- und herbewegbar. Auf dem Preßkasten 1 befindet sich im Bewegungsbereich des Preß-stempels 2, 3 ein Einfüllschacht 1a für das zu verpressende Material. Die Herstellung eines Ballens 4 erfordert jeweils mehrere Arbeitshübe des Preßstempels, bis der Ballen 4 umschnürt werden kann. In der in Fig. 1 dargestellten Situation hat der Ballen 4 seine Endabmessung erreicht und ist zum Umschnüren fertig, ein Ballen 5 ist bereits umschnürt.

Bis zur Beendigung des Umschnürvorganges bleibt der Preß-stempel 2, 3 in seiner vorderen Endstellung (dargestellt durch die Pfeilspitze 36) und hält die Füllung des gepreß-ten Ballens 4 zusammen. Der Kopf des Preßstempels 2 weist die erwähnten, in einer Bahn oder Bewegungsachse 6a einer Schnürnadel 6 verlaufenden Schnürnuten 3 auf, welchen entsprechende Schlitze in den Preßkastenwänden zugeordnet sind. Die Schnürnadel 6 senkt sich durch diese Schlitze und die Schnürnuten 3 im Kopf des Preßstempels 2 bis unter den Preßkanten ab, nimmt einen von einer unteren Vorratsspule 7 kommenden und zur (in Förderrichtung) vorderen Unterkante des Ballens 4 laufenden Unterdraht 8 auf und bildet beim anschließenden Hochfahren eine offene Schlaufe 8a, 8b zwischen einer Umlenkrolle 11, dem Kopf 6b der Schnürnadel 6 und der unteren Hinterkante des Ballens 4. Ein Schnürkopf 12 fährt nun in einem Rahmen 13, geführt in einer Bahn 13a, nach vorn in Arbeitsstellung, wobei sich ein Drahtabschnitt 15 eines von einer oberen Vorratsrolle 14a kommenden Oberdrahtes 14 zwischen Umlenkrollen 16 und 17 in den Drillschlitz eines Drillrades 12a des Schnürkopfes 12 soweit einlegt, daß er den Grund des Drillschlitzes erreicht.

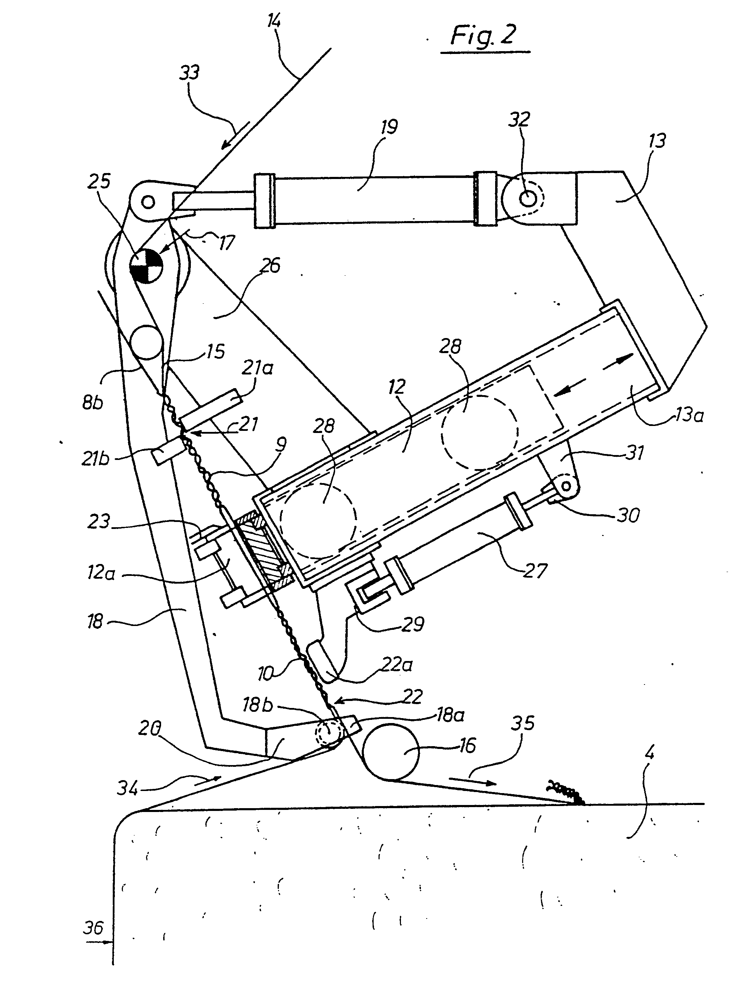

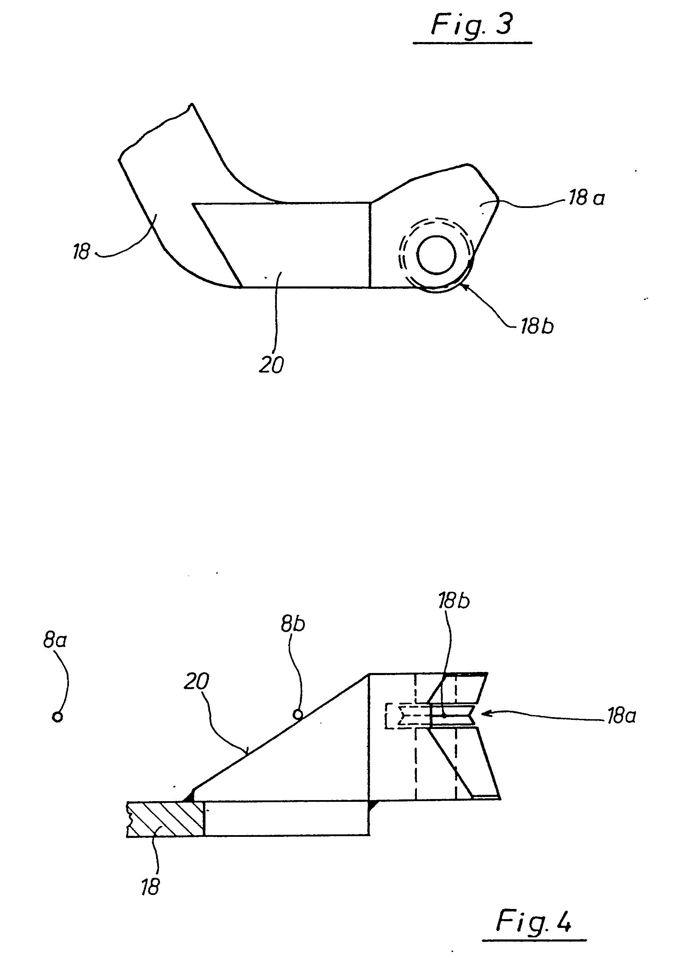

Nun wird ein als Hebel ausgebildeter Fangfinger 18 mit Hilfe eines Antriebe 19 soweit in Richtung auf die Bewegungsachse 6a der Schnürnadel 6 zurückgeschwenkt, bis seine Fangkerbe 18a (Fig. 2-4) hinter den dem Drahtabschnitt 15 nächstgelegenen Abschnitt 8b der offenen Drahtschlaufe 8a, 8b gelangt ist (siehe strichpunktierte Darstellung in Fig. 1). Er bewegt sich dabei parallel zur durch die Drahtschlaufe 8a, 8b festgelegten Ebene in einem Abstand von dieser, der gerade eine Berührung zwischen dem Fangfinger 18 und den Drahtabschnitten 8a und 8b vermeiden läßt. Bei einer bevorzugten, in den Figuren 3 und 4 näher gezeigten Ausgestaltungsform ist der Kopf des Fangfingers 18 mit der Fangkerbe 18a gegenüber dem Fangfinger selbst soweit in die Schlaufenebene versetzt, daß letztere genau durch die Fangkerbe 18a geht. Durch eine Anlaufschräge 20 als Übergang vom Schaft des hebelförmigen Fangfingers 18 zu seinem die Fangkerbe 18a tragenden Kopf wird erreicht, daß der Abschnitt 8b der Schlaufe 8a, 8b beim Zurückschwenken des Fangfingers 18 seitlich ausweicht und dann vor die Fangkerbe 18a zurückspringt, beim Vorschwenken des Fangfingers 18 in Richtung auf seine Ausgangsposition von der Fangkerbe 18a erfaßt und ebenfalls in den Drillschlitz eingelegt wird. Bei einer vorteilhaften Ausgestaltung des Fangfingerkopfes ist die Fangkerbe 18a gabelförmig ausgebildet und zwischen den beiden Schenkeln im Grund der Kerbe eine Rolle 18b so eingesetzt, daß die Rille der Rolle 18b die Drahtführung übernimmt.

Eine weitere Möglichkeit zum Einfangen des Abschnitts 8b der Schlaufe 8a, 8b ergibt sich durch ein kurzzeitiges seitliches Verschieben des Fangfingers 18 während des Vorbeiführens des Fingerkopfes am Drahtabschnitt 8b.

Nach dem Einlegen der beiden Drähte 8 und 14 bzw. ihrer Abschnitte 8b und 16 wird das Drillrad 12a in Bewegung gesetzt, wodurch die beiden Drahtabschnitte 8b und 15 in zwei Abschnitten oberhalb und unterhalb des Drillschlitzes in jeweils entgegengesetztem Sinn zu Drillstellen 9 und 10 verdrillt werden. Danach wird die Drahtverbindung etwa in der Mitte zwischen den beiden Drillstellen mittels einer Schneidvorrichtung 23 durchtrennt, und dann die Schnürnadel 6 etwas abgesenkt.

In der dargestellten Ausführungsform besitzt die erfindungs-gemäße Vorrichtung zusätzlich die Möglichkeit, die beiden Drillstellen 9, 10 nach dem Durchtrennen jeweils für sich umzubiegen, und zwar mit Hilfe zweier Abbiegevorrichtungen 21 und 22, von denen die erstgenannte aus einem feststehenden Widerlager 21a und einer zugehörigen bewegbaren Gegenkante 21b besteht, während die zweitgenannte, untere Abbiegevorrichtung 22 ein festes Widerlager 22a besitzt, als dessen bewegbare Gegenkante die Fingerkerbe 18a des Fangfingers 18 wirkt. In der dargestellten Ausführungsform ist auch die Gegenkante 21b am Fangfinger 15 angebracht, der zur Durchführung des Abbiegevorganges nach dem Trennvorgang kurzzeitig um einen ausreichenden Betrag entgegen dem Uhrzeigersinn aus der Ruhelage geschwenkt wird. Danach kehren Fangfinger 15 und Schnürkopf 12 wieder in ihre Ausgangsstellungen zurück.

Beim Zurückholen des Preßstempels 2 zum Aufnehmen der ersten Materialcharge für den nächsten Ballen 4 dehnt sich der nun umschnürte Ballen 4 etwas aus, wodurch die Umschnürung gespannt wird, was dazu führt, daß sich die untere Drillstelle 10 fest auf die Ballenoberseite auflegt. Der fertige Ballen 4 wird während des Pressens eines neuen Ballens weitergeschoben, wobei dann die Drillstelle 10 unter der Umlenkrolle 15 hindurchgeführt wird. Dadurch ergibt sich die zusätzliche Möglichkeit, die Drillstelle mit ihrem scharfen Ende - falls gewünscht - durch geeignete Führung in die Ballenoberfläche hineinzudrücken. Die obere Drillstelle 9 strafft sich mit dem Wachsen des dem Ballen 4 folgenden, neuen Ballens und legt sich schließlich nach Durchlaufen der Rolle 16 ebenfalls auf die Ballenoberfläche auf. Der nächste Umschnürvorgang beginnt, sobald der neue Ballen seine vorgesehene Größe erreicht hat.

In Fig. 2 ist die gesamte den Schnürkopf mit Antrieben und Tragvorrichtung umfassende Baugruppe 24 schematisch dargestellt. Der Rahmen 13 dient als Traggerüst und ist mit dem Pressenrahmen in nicht dargestellter Weise starr verbunden. Teil des Rahmens 13 ist ein seitlich offenes U-Profil als Führungsbahn für den Schnürkopf 12. Außer dem Schnürkopf 12 besteht die Baugruppe 24 aus dem in einer Lagerung 25 koaxial zur oberen Umlenkrolle 17 an einer Traverse 26 des Rahmens 13 schwenkbar befestigen, als Hebel ausgebildeten Fangfinger 18, den den Drillabschnitt begrenzenden Rollen 16 und 17, den Abbiegevorrichtungen 21 und 22, der Schneidvorrichtung 23, einem Hydraulikzylinder 27 als Antrieb für den Schnürkopf 12 sowie einem Hydraulikzylinder 19 als Schwenkantrieb für den Fangfinger 18.

Der Schnürkopf 12 wird mit Hilfe von Rollen 28 in der Führungsbahn 13a geführt. Sein Weg ist dabei so bemessen, daß der Oberdraht 14 vom Schnürkopf in dessen Ruhestellung sicher freikommt, während die Arbeitsstellung derart justiert wird, daß der Drahtabschnitt 15 den Grund des Schlitzes im Drillrad 12a berührt. Der Hydraulikzylinder 27 stützt sich über ein Widerlager 29 an der zum Rahmen 18 gehörenden Führungsbahn 18a ab; seine Kolbenstange steht mit ihrem Kopf 30 mit einer am Schnürkopf 12 befestigten Nase 81, über diese den Schnürkopf 12 bewegend, in Verbindung. Der Schwenkantrieb 19 für den Fangfinger 18 schließlich stützt sich bei 32 an dem Rahmen 13 ab.

Die in Fig. 2 eingezeichneten Richtungspfeile 33, 34 und 35 kennzeichnen die Laufrichtung der Drähte 8 und 14 während des Arbeitens der Ballenpresse.

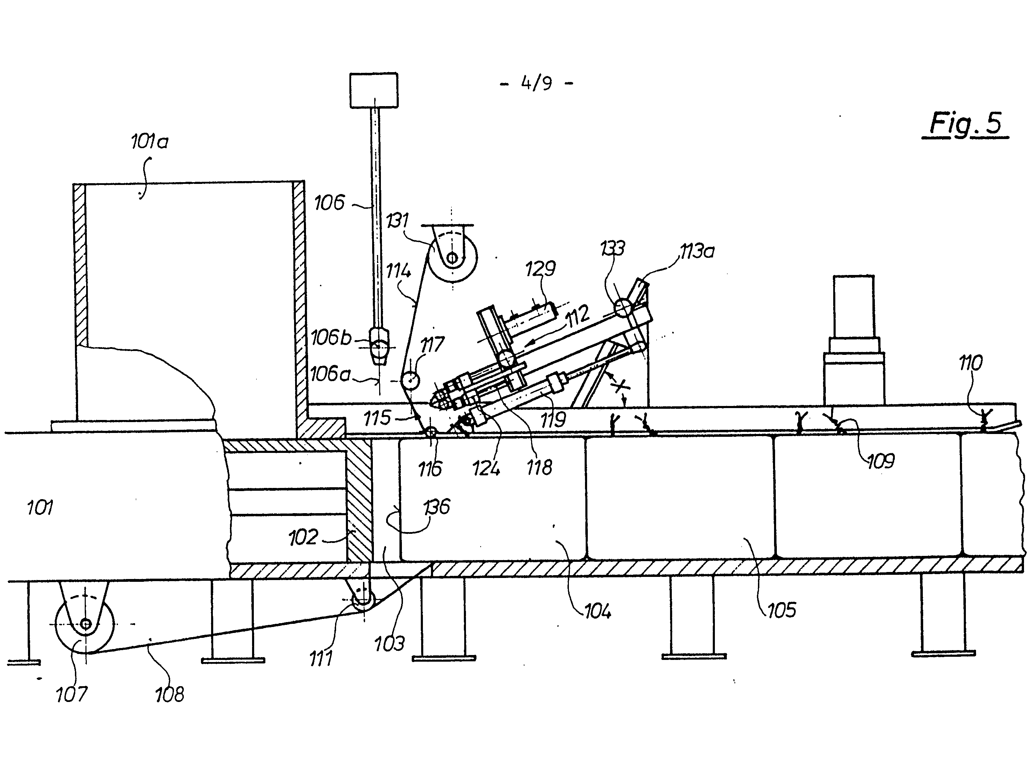

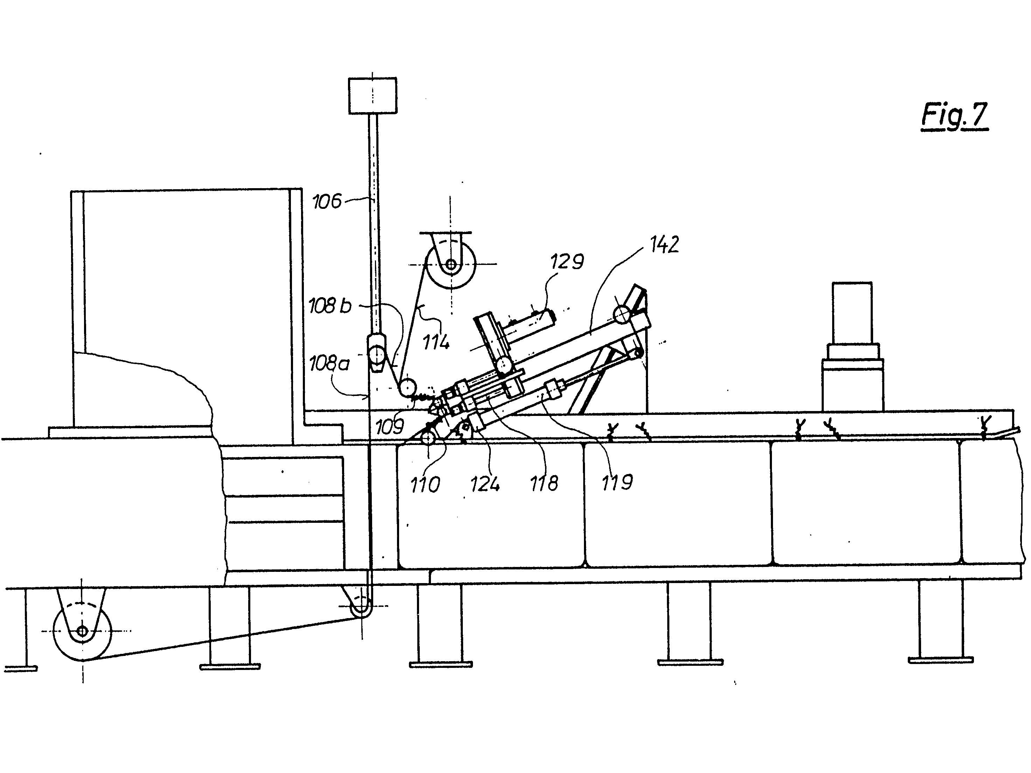

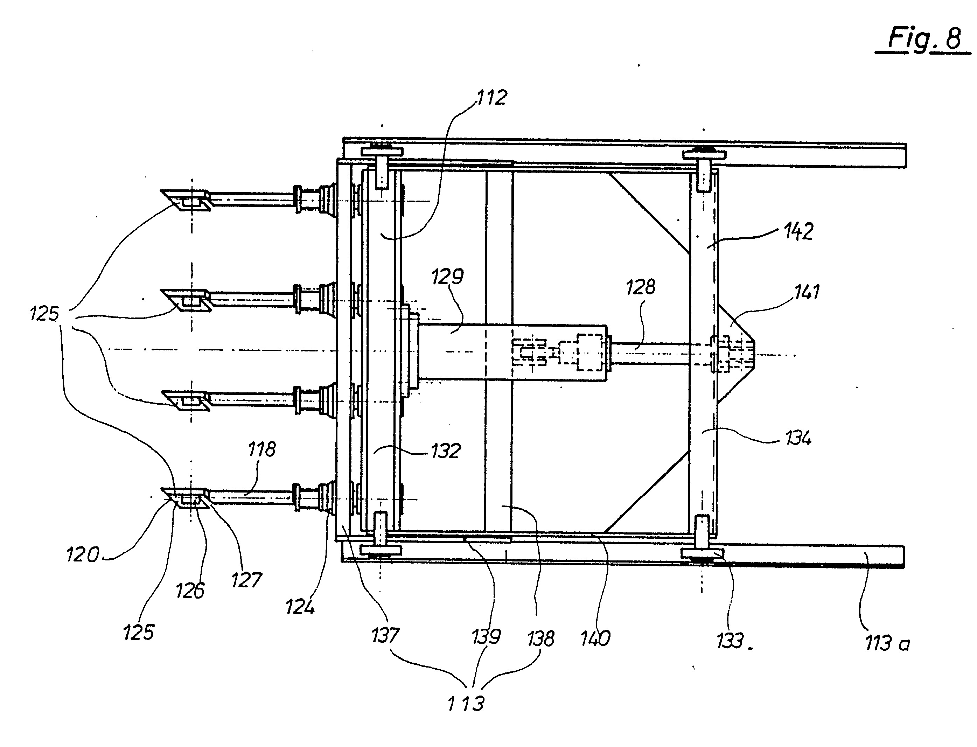

Ein zweites Ausführungsbeispiel der Erfindung wird nachfolgend anhand der Fig. 5 bis 10 beschrieben, wobei die gezeigte Ballenpresse im wesentlichen der gemäß Fig. 1 entspricht, d.h. hier ebenfalls ein Preßkasten 101 mit rechteckigem Querschnitt, ein Preßstempel 102 mit stirnseitigen Schnürnuten 103, ein Einfüllschacht 101a, Schnürnadeln 106, mindestens eine untere Vorrataspule 107 für den Unterdraht 108 mit einer Umlenkrolle 111 vorgesehen sind. Auch der Arbeitsablauf ist in wesentlichen Zügen derselbe und wird weiter unten für das zweite Ausführungsbeispiel nochmals im einzelnen anhand der Fig. 5 bis 7 beschrieben werden. Zunächst wird unter Bezugnahme auf die Fig. 8 bis 10 der Aufbau der zweiten Ausführungsform des Verschnürkopfes erläutert:

Fig. 8 zeigt in Draufsicht eine Verschnüreinrichtung mit einem Verschnürkopf 112 mit vier Fanghakenpaaren 125, der damit zur gleichzeitigen Herstellung von vier parallelen Drahtschlingen geeignet ist. In einer Traverse 137 sind in gleichen Abständen vier Joche 124 so festgelegt, daß sie mit Hilfe eines Klemm- und Schneidzylinders 128 gemeinsam bewegt werden können. Die Traverse 137 bildet hierzu mit dem quersteg 136 und Längsstegen 139 einen unabhängig von einem zweiten, aus einem als Traverse dienenden Antriebskasten 132, einer hinteren Traverse 134 und zwei Längsstegen 140 bestehenden Rahmen bewegbaren ersten Rahmen 113. Der am Quersteg 138 angreifende Klemm- und Schneidzylinder 128 stützt sich gegen ein mit der Traverse 134 verbundenes Blech 141 ab. Der aus dem Antriebskasten 132, der hinteren Traverse 134 und den beiden Längsstegen 140 bestehende zweite Rahmen 142 ist auf Rollen 133 in den Laufschienen 113a verfahrbar, die in einem spitzen Winkel zur Horizontalen angeordnet sind, und wird mittels eines Verschiebeantriebs 119 bewegt. Der Antriebskasten 132 weist zur geradlinigen Führung für jeden Fangfinger 118 je eine koaxial zu Führungsbohrungen 135 in den Jochen angeordnete Lagerung für die hinteren Enden der Fangfinger 118 auf. Etwa in der Mitte des Antriebskastens 132 ist auf seiner Rückseite der für die vier Verschnürköpfe gemeinsame Drillantrieb 129 befestigt, der in an sich bekannter Weise mit den einzelnen Fangfingern verbunden ist, z. B. über Zahnräder, Zahnriemen, usw., wobei für das störungsfreie Arbeiten aber sichergestellt sein sollte, daß die in Ruhestellung befindlichen Fanghaken in beiden Endlagen eine streng gleiche Stellung einnehmen, die entweder der in der Zeichnung dargestellten oder einer um 180° um die Fangfingerlängsachse verdrehten entspricht. Dadurch wird sowohl ein sicheres Fangen der Drähte 108b und 115 als auch ein störungsfreies Freigeben der fertigen Drillstellen 109 und 110 gewährleistet.

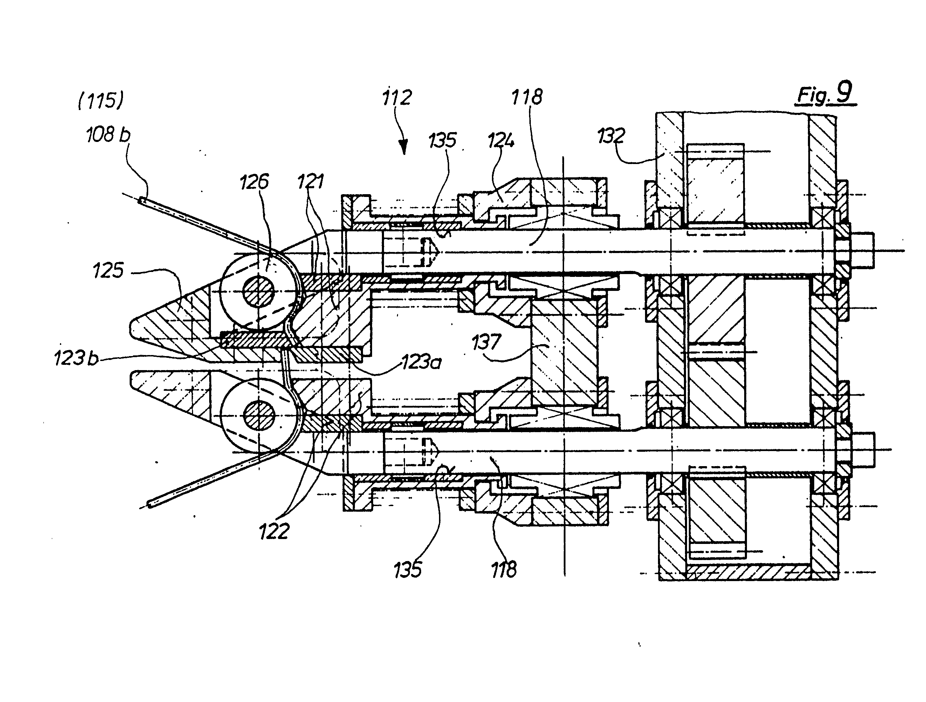

Fig. 9 zeigt einen senkrechten Schnitt durch einen erfindungsgemäßen Verschnürkopf 112. Das Joch 124 besteht aus einem vorderen Teil mit den daran festsitzenden Klemmbacken 121 und 122 und der Schneidklinge 128a, welche mit der an nur einem der beiden Fanghaken 125 eines Verschnürkopfes 112 befestigten Gegenklinge 123b beim Durchtrennen der Drähte 108b und 115 zusammenwirkt, und einem hinteren Teil, der die eigentliche Lagerung für die Längs- und die Drehbewegung aufweist; bei der dargestellten Ausführungsform reicht diese bis zum vorderen Jochteil und ist in an sich üblicher Weise ausgeführt, weshalb auf die Darstellung von Einzelheiten der Lagerausführung verzichtet wurde.

Jeder Fangfinger 118 besteht aus einem zylindrischen, in den Führungshohrungen 135 laufenden Teil und einem den Kopf bildenden Fanghaken 125 mit einer Anlaufschräge 120 und einer Drahtführungsrolle 126. Einer der Fanghaken 125 eines verschnürkopfes 112 trägt die beim Drillvorgang mitrotierende Gegenklinge i23b. Die Figur zeigt die Fanghaken 113 in Klemm- und Schneidstellung und läßt die Funktion der Trennvorrichtung und der Klemmbacken deutlich erkennen.

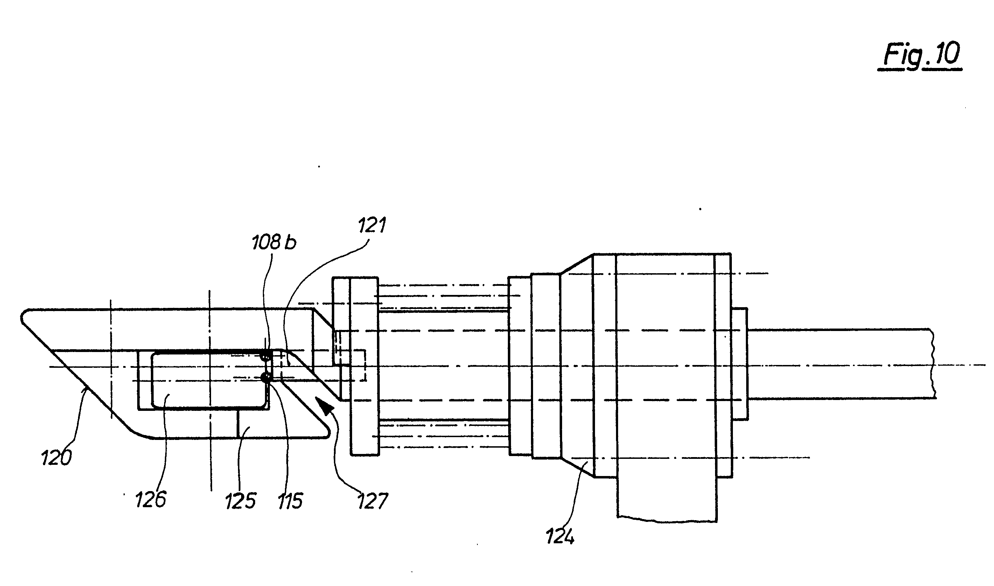

Schließlich zeigt Fig. 10 einen Fanghaken 125 in einer Stellung senkrecht zur Drahtschleifenebene nach dem Einfangen der beiden Drähte 108b und 115. Sie läßt erkennen, wie sich die beiden Drähte in ein Hakenmaul 127 einlegen und auf einer vorzugsweise vorgesehenen Rolle 126 geführt und mittels der Klemmbacke 121 gehalten werden.

Dieser Schnürkopf 112 arbeitet folgendermaßen:

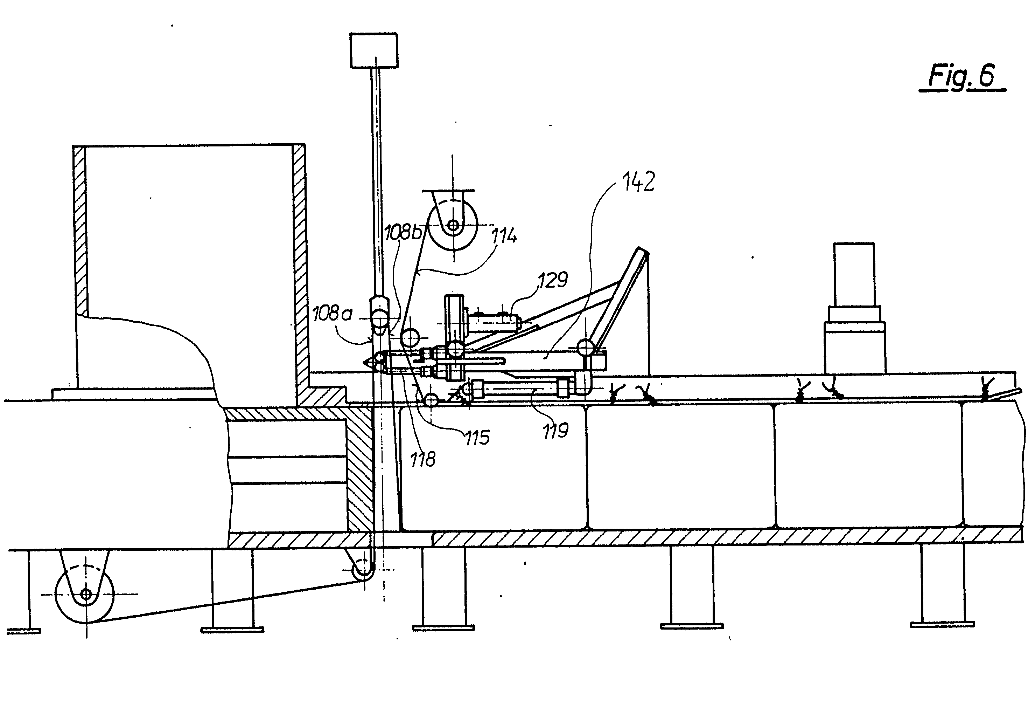

Wie beim zuvor beschriebenen Ausführungsbeispiel bleibt der Preßstempel 102 bis zur Beendigung des Umschnürvorgangs in seiner vorderen Endstellung und hält die Füllung des ge-preßten Ballens 104 zusammen. Ebenso wird bei diesem Ausführungsbeispiel, wie die Fig. 5 und 6 zeigen, mit Hilfe der Schnürnadel 106 der von der unteren Vorratsspule 107 kommende Unterdraht 108 zur Bildung einer offenen Schleife 108a, 108b nach oben über die Oberkante der Ballen gezogen. Der nachfolgende Ablauf unterscheidet sich zwar nicht grundsätzlich jedoch in den sich aus der folgenden Beschreibung ergebenden Details aufgrund der etwas anderen Konstruktion vom im Zusammenhang mit dem ersten Ausführungsbeispiel des Schnürkopfs 12 beschriebenen Ablauf.

Gemäß Fig. 6 wird nach Bilden der offenen Schleife 108a, 108b der Schnürkopf 112 auf dem zweiten Rahmen 142, angetrieben durch den Verschiebeantrieb 119 entlang der Bahn 113a nach vorn in Fangposition gefahren, wobei das Joch 124 aber in Bewegungsrichtung gesehen deutlich vor dem Drahtabschnitt 115 des Oberdrahts 114 festgehalten wird. Die Fanghaken 125 der Fangfinger 118 werden weiter soweit in Richtung auf die Führungsbahn 106a der Schnürnadel 106 bewegt, bis die Öffnungen der Hakenmäuler 127 hinter den nächstgelegenen Abschnitt 108b der offenen Drahtschleife 108a, 108b gelangt sind; sie bewegen sich dabei in der bzw. parallel zur durch die Drahtschleife 108a, 108b festgelegten Ebene. Bei der dargestellten Ausführungsform liegen die Fanghaken 125 der Fangfinger 118 mit ihren Hakenmäulern 127 in der Schlaufenebene. Das seitliche Wegdrücken der Drähte 108b und 115 beim Ausfahren der Fanghaken in Fangstellung wird durch eine Anlaufschräge 120 an der Vorderseite jedes Fanghakens 125 erleichtert. Die zur Seite geschobenen Drähte 108b und 115 springen in die Hakenmäuler ein und legen sich in den Hakengrund auf die Drahtführungsrolle 126.

Nachdem der Drahtabschnitt 108b der offenen Drahtschleife 108a, 108b in die Hakenmäuler 127 der beiden in der Drahtschlaufenebene parallel zueinander angeordneten Fangfinger 118 eingesprungen ist, wird der Verschnürkopf 112 in seine Grundstellung zurückgefahren. Hierbei springt der zur Seite geschobene Draht 115 ebenfalls in die Hakenmäuler ein, so daß nun beide Drahtabschnitte 108b und 115 am Grund beider Hakenmkuler 127 liegen. Sobald die Grundstellung erreicht ist, bis zu welchem Zeitpunkt bei der dargestellten Ausführungsform die Klemmbacken 121, 122 und die Trennvorrichtung 123a, 123b noch nicht in Tätigkeit getreten sind, wird der Klemm- und Schneidantrieb, im dargestellten Fall ein Hydraulikzylinder 128 (Fig. 8), wirksam. Die Schneidvorrichtung 123a, 123b durchtrennt die beiden Drähte 108b und 115 und praktisch gleichzeitig setzen die beiden Klemmbacken 121 und 122 auf den um die Führungsrollen 126 liegenden Drähten 108b und 115 auf und pressen diese gegen die Führungsrollen 126, so daß sie sicher festgehalten werden. Anschließend wird der Drillantrieb 129 in Gang gesetzt, wodurch die beiden Drillstellen 109 und 110 synchron, jedoch getrennt erzeugt werden. Durch Lösen des Klemm- und Schneidantriebs 128 werden dann die beiden Drillstellen 109 und 110 freigegeben.

Bei einer vereinfachten Ausführungsform kann der Fang-, Schneid- und Klemmvorgang auch mit nur einem Antrieb, beispielsweise dem Fangfingerantrieb 119, durchgeführt werden. In diesem Fall kann mit dem Erreichen der Grundstellung das Durchtrennen und Festklemmen erfolgen, wonach dann der Drillantrieb betätigt wird. Es muß nur sichergestellt sein, daß anschließend an den Drillvorgang die beiden Drillstellen freigegeben werden.

## Patentansprüche

1. Vorrichtung zum Umschnüren von Ballen (4), die im Preßkanal einer Ballenpresse mittels eines Preßstempels (2) hergestellt und in mindestens eine von zwei Drahtvorratsrollen (7, 14a) gespeiste Drahtschlinge gepreßt werden, wobei eine Vorratsrolle (14a) einen Oberdraht (14) liefert, der über zwei beiderseits eines Verschnürkopfes (12) gelagerte Umlenkrollen (16, 17) läuft, während die andere Vorratsrolle (7) einen Unterdraht (8) liefert, der mit dem Oberdraht (14) verbunden ist und bleibt, mit einer Schnürnadel (6), deren Bahn den Preßkanal durchdringt und den Unterdraht (8) hinter dem fertigen Ballen (4) als Drahtschleife hochzieht, wobei der Verschnürkopf (12) ein Drillwerkzeug (12a) zum Erzeugen zweier hintereinander liegender Drillstellen (9, 10) aus dem Oberdraht und dem diesen benachbarten Draht der Drahtschleife und eine Trennvorrichtung (23) zum Durchtrennen der Drähte zwischen den beiden Drillstellen aufweist, dadurch gekennzeichnet, daß der Abstand zwischen der unteren Umlenkrolle (16; 116) und der durch die Preßendstellung (36; 136) des Preßstempels (2, 3; 102, 103) gelegten Vertikalebene mindestens gleich dem Abstand zwischen der unteren Umlenkrolle (16; 116) und der Trennvorrichtung (23; 123a, 123b) ist und mindestens ein Fangfinger (18; 118) quer auf die von der Schnürnadel (6; 106) und zwischen den Umlenkrollen (16, 17; 116, 117) gespannt gehaltenen Drähte (8b, 16; 108b, 115) zwecks Zusammenführung der im Drillwerkzeug (12a; 118, 125) miteinander zu verdrillenden Drähte (8b, 15; 108b, 115) einwirkt.

2. Vorrichtung nach Anspruch 1, dadurch gekennzeichnet, daß der Fangfinger (18) im Bereich zwischen der unteren Umlenkrolle (16) und dem Verschnürkopf (12) die zusammengeführten und zu verdrillenden Drähte (8b, 15) hält, wobei der Bewegungsspielraum des Fangfingers (18) zwischen seinen Endpositionen sich von der die Mittelachse (6a) der Schnürnadel (6) enthaltenden Vertikalebene bis zu der die Drehachse (16a) der unteren Umlenkrolle (16) enthaltenden Vertikalebene erstreckt.

3. Vorrichtung nach Anspruch 1 oder 2, gekennzeichnet durch einen Hebel als Fangfinger (18), der auf der Drehachse der oberen Umlenkrolle (17) schwenkbar gelagert und mit einem Schwenkantrieb (19) verbunden ist.

4. Vorrichtung nach einem oder mehreren der Ansprüche 1 bis 3, dadurch gekennzeichnet, daß die Spitze des Fangfingers (18) gabelförmig (Fangkerbe 18a) geöffnet und mit einer einseitigen Anlaufschräge (20) versehen ist.

5. Vorrichtung nach einem oder mehreren der Ansprüche 1 bis 4, dadurch gekennzeichnet, daß die Spitze des Fangfingers (18) nach Art eines Widerhakens ausgebildet ist.

6. Vorrichtung nach einem oder mehreren der Ansprüche bis 5, dadurch gekennzeichnet, daß im Bereich der zu verdrillenden Drahtabschnitte ober- und unterhalb des Verschnürkopfes (12) je eine Abbiegevorrichtung (21 und 22) angeordnet ist.

7. Vorrichtung nach einem oder mehreren der Ansprüche 1 bis 6, dadurch gekennzeichnet, daß die untere Umlenkrolle (16) knapp oberhalb der Oberseite des gerade zu verpressenden und zu umschnürenden Ballens (4) angeordnet ist.

8. Vorrichtung nach einem oder mehreren der Ansprüche 1 bis 7, dadurch gekennzeichnet, daß der Verschnürkopf (12) in und außer Arbeitsstellung bewegbar gelagert ist.

9. Vorrichtung nach Anspruch 1, gekennzeichnet durch zwei jeweils einer Drillstelle (109, 110) zugeordnete Fangfinger (118) (Fangfingerpaar) als Drillwerkzeuge.

10. Vorrichtung nach Anspruch 9, dadurch gekennzeichnet, daß die Fangfinger (118) mit Klemmbacken (121, 122) zusammenwirken.

11. Vorrichtung nach Anspruch 9 oder 10, dadurch gekennzeichnet, daß die zwei einer Drillstelle (109, 110) zugeordneten Fangfinger (118) je aus einem zylindrischen Schaft mit einem Fanghaken (125) bestehen und jeweils parallel zueinander angeordnet um ihre Längsachse zu rotieren und in Richtung ihrer Längsachse zu verschieben sind.

12. Vorrichtung nach einem oder mehreren der Ansprüche 9 bis 11, gekennzeichnet durch einen gemeinsamen Drill-(129) und Verschiebe-(Fang-) (119) Antrieb für jedes Fangfingerpaar.

13. Vorrichtung nach einem oder mehreren der Ansprüche 9 bis 12, gekennzeichnet durch ein je eine Klemmbacke (121, 122) für jeden Fangfinger (118) und eine im Dereich zwischen den Fanghaken (125) angeordnete Schneidklinge (123a) aufweisendes Joch (124), in dem die beiden Fangfinger (118) eines Fangfingerpaares derart parallel gelagert sind, daß ihre Längsachsen im wesentlichen in der durch die zu verdrillenden Drähte (108b, 115) definierten Ebene liegen.

14. Vorrichtung nach einem oder mehreren der Ansprüche 9 bis 13, gekennzeichnet durch zwei achsparallele Bohrungen (135) im Joch (124) für das Fangfingerpaar.

15. Vorrichtung nach einem oder mehreren der Ansprüche 9 bis 14, dadurch gekennzeichnet, daß jeder Fanghaken (125) eine einseitig abgeschrägte Vorderfläche (120) als Anlaufschräge aufweist, deren Versatz durch Länge und Richtung jedes Hakenmauls (127) derart ausgeglichen wird, daß die geführten Drähte (108b, 115) praktisch in der Fangfingerachse liegen.

16. Vorrichtung nach einem oder mehreren der Ansprüche 9 bis 15, gekennzeichnet durch eine im wesentlichen zylindrische Rolle (126) zur Führung der Drähte (108b, 115) im Hakenmaul (127) jedes Fangfingers (118).

17. Vorrichtung nach einem oder mehreren der Ansprüche 9 bis 16, dadurch gekennzeichnet, daß die jeweils den einzelnen Fangfingern (118) zugeordneten Klemmbacken (121; 122) mit der Drahtführung (126) im Hakenmaul (127) als Klemmvorrichtung zusammenwirken und die an der Klemmbacke (121) angeordnete Schneidklinge (123a) mit der an einer der Fangfingerspitzen (125) angebrachten Gegenklinge (123b) die Trennvorrichtung (123) bilden.

18. Vorrichtung nach einem oder mehreren der Ansprüche 9 bis 17, dadurch gekennzeichnet, daß der Verschnürkopf (112) zwischen einer Grundstellung (Fig. 5) und einer Fangstellung (Fig. 6) verfahrbar ist.

19. Vorrichtung nach einem oder mehreren der Ansprüche 9 bis 16, dadurch gekennzeichnet, daß die Grundstellung (Fig. 5 und 7) gleichzeitig Klemm-, Schneid- und Drillstellung ist.

## Revendications

1. Dispositif de cerclage et de ficelage de balles (4) qui sont fabriquées dans le canal de compression d'une presse à paqueter au moyen d'un poussoir (2) et serréesdans au moins une boucle de fil métallique provenant de deux rouleaux d'alimentation (7, 14a), l'un des rouleaux d'alimentation (14a) fournissant un fil supérieur (14) qui passe sur deux galets de renvoi (16, 17) montés sur paliers de part et d'autre d'une tête de ficelage (12) tandis que l'autre rouleau d'alimentation (7) fournit unfil inférieur (8) qui est relié au fil supérieur (14) et passe dans une aiguille à passer (6) dont le trajet traverse le canal de compression et qui tire le fil inférieur (8) vers le haut en formant une boucle, derrière la balle (4) déjà fabriquée, la tête de ficelage (12) comportant un outil à tortiller (12a), pour la réalisation de deux épissures (9, 10) successives formées à partir du fil supérieur et du fil de la boucle qui est situé près de lui, et un dispositif séparateur (23) pour la séparation des fils entre les deux épissures, caractérisé en ce que la distance comprise entre le galet de renvoi inférieur (16, 116) et le plan vertical correspondant à la position (36, 136) de fin de compression du poussoir (2, 3, 102, 103) est au moins égale à la distance comprise entre le galet de renvoi inférieur (16, 116) et le dispositif séparateur (23, 123a, 123b) et en ce qu'au moins un doigt de préhension (18, 118) agit dans le sens transversal sur les fils (8b, 15, 108b, 115) maintenus tendus par l'aiguille à passage (6, 100) et entre les galets de renvoi (16, 17, 116, 117) pour rapprocher les fils (8b, 15, 108b 115) qui doivent être tortillés l'un avec l'autre dans l'outil à tortiller (12a, 118, 125).

2. Dispositif selon la revendication 1, caractérisé en ce que, dans la zone comprise entre le galet de renvoi inférieur (16) et la tête de ficelage (12), le doigt de préhension (18) maintient les fils (8b, 15 qui sont rapprochés pour être tortillés ensemble, l'espace disponible pour le déplacement du doigt de préhension (18) entre ses positions extrêmes s'étendant depuis le plan vertical contenant l'axe médian (6a) de l'aiguille à passer (6) jusqu'au plan vertical contenant l'axe de rotation (16a) du galet de renvoi (16),

3. Dispositif selon l'une des revendications 1 ou 2, caractérisé en ce que le doigt de préhension (18) est un levier qui est monté de manière à pouvoir pivoter sur l'axe de rotation du galet de renvoi supérieur (17) et est relié à un dispositif d'entraînement (19) provoquant le pivotement.

4. Dispositif selon l'une des revendications 1 à 3, caractérisé en ce que la pointe du doigt de préhension (18) est ouverte en forme de fourche (encoche de prise 18a) et comporte, d'un côté, une partie d'engagement oblique (20).

5. Dispositif selon l'une des revendicationd 1 à 4, caractérisé en ce que la pointe du doigt de préhension (18) a la forme d'un crochet.

6. Dispositif selon l'une des revendications 1 à 5, caractérisé en ce que, dans la zone des segments de fil qui doivent être tortillés, au-dessus et au-dessous de la tête de ficelage (12), il comporte des dispositifs de flexion (21 et 22).

7. Dispositif selon l'une des revendications 1 à 6, caractérisé en ce que le galet de renvoi inférieur (16) est situé juste au-dessus du côté supérieur de la balle (4) qui doit être comprimée et ficelée.

8. Dispositif selon l'une des revendications 1 à 7, caractérisé en ce que la tête de ficelage peut se mouvoir pour se placer dans ou hors de sa position de travail.

9. Dispositif selon la revendications 1, caractérisé en ce qu'à chaque emplacement de réalisation d'une épissure (109, 110) il comporte des outils à tortiller formés par des doigts de préhension (118) (paire de doigts de préhension).

10. Dispositif selon la revendication 9, caractérisé en ce que les doigts de préhension (118) coopèrent avec des mâchoires de serrage (121, 122).

11. Dispositif selon l'une des revendications 9 ou 10, caractérisé en ce que les deux doigts de prehension (118) correspondant à un emplacement d'épissure (109, 110) sont formés chacun d'une tige cylindrique et d'un crochet de prise (125) et sont montés de manière à être parallèles l'un à l'autre pour tourner autour de leur axe longitudinal et à se deplacer dans le sens de leur axe longitudinal.

12. Dispositif selon l'une des revendications 9 à 11, caractérisé en ce qu'il comprend un dispositif d'entraînement organes de tortillement commun (129) et de préhension (119) pour chaque doigt de préhension.

13. Dispositif selon l'une des revendications 9 à 12, caractérisé en ce qu'il comprend un joug (124) qui comporte une mâchoire de serrage (121, 122) pour chaque doigt de préhension (118) et une lame-coupante (123a) placée entre les doigts de préhension (125) et dans lequel les deux doigts de préhension (118) d'une paire de préhension sont montés sur paliers parall*élément l'un à l'autre de telle manière que leurs axes longitudinaux soient sensiblement dans le plan défini par les fils qui doivent être tortillés (108b, 115).

14, Dispositif selon l'une des revendications 9 à 13, caractérisé en ce que le joug (124) comporte deux alésages (135) d'axes parallèles pour la paire de doigts de préhension.

15. Dispositif selon l'une des revendications 9 à 14, caractérisé en ce que chaque crochet de préhension (125) comporte une surface d'engagement antérieure (120) biseautée d'un côté dont le décalage est compensé par la longueur et la direction de chaque crochet (127) de telle manière que les fils guidés (108b, 115) se trouvent pratiquement sur l'axe du doigt de préhension.

16. Dispositif selon l'une des revendications 9 à 15, caractérisé en ce qu'il comprend un galet sensiblement cylindrique (126) pour le guidage des fils (108b, 115) dans le crochet (127) de chaque doigt de préhension (118).

17. Dispositif selon l'une des revendications 9 à 16, caractérisé en ce que les mâchoires de serrage (121, 122) associées aux doigts de préhension (118) coopèrent comme dispositif de serrage avec le dispositif de guidage des fils (126) dans le crochet (117) et en ce que la lame coupante (123a) associée à la mâchoire de serrage (121 forme, avec la contre-lame (123b) montée sur l'une des pointes du doigt de préhension (125), le dispositif de séparation (123),

18. Dispositif selon l'une des revendications 9 à 17, caractérisé en ce que la tête de ficelage (112) peut se déplacer entre une position fondamentale (Figures 5) et une position de préhension (Figure 6),

19. Dispositif selon l'une des revendications 9 à 19, caractérisé en ce que la position fondamentale (Figures 5 et 7) est à la fois position de serrage, de coupe ou de séparation et de tortillement.

**Claims**

1. Apparatus for banding bales (4), which are manufactured in the pressing duct of a baling press by means of a pressing ram (2) and are pressed into at least one wire loop supplied from two wire storage reels (7, 14a), ons storage reel (14a) supplying an upper wire (14) which runs over two guids rollers (16, 17) journalled on either side of a lacing head (12), while the other storage reel (7) supplies a lower wire (8), which is and remains connected with the upper wire (14), comprising a banding needle (6), the path of which passes through the pressing channel and which raises the lower wire (8) behind the finished bale (4) as a wire loop, wherein the lacing head (12) comprises a twisting tool (12a) for producing two twist points (9, 10), situated one behind the othsr, from the upper wire and ths wire of the wire loop adjacent thereto and a cutting device (23) for cutting through the wires between the two twist points, characterized in that ths distance between the lower guide roller (16; 116) and the vertical plans passing through the pressing limiting position (36; 136) of the pressing ram (2, 3; 102, 103) is at least equal to the distance between the lower guide roller (16; 116) and the cutting device (23; 123a, 123b), and that at least one capture finger (18; 118) acts transversely upon the wires (8b, 15; 108b, 115) held taut by the banding needle (6; 106) and between the guide rollers (16, 17; 116, 117) for the purpose of bringing together the wires (8b, 15; 108b, 115) to be twisted together in the twisting tool (12a; 118, 125).

2. Apparatus according to claim 1, characterized in that the capture finger (18) holds the wires (8b, 15) brought together and to be twisted together in the region between the lower guide roller (16) and the lacing head (12), the movement clearance for the capture finger (18) between its limiting positions extending from the vertical plane containing the central axis (6a) of the banding needle (6) to the vertical plane containing the rotational axis (16a) of the lower guide roller (16).

3. Apparatus according to claim 1 or 2, characterized by a lever as capture finger (18), which is pivotally journalled on the rotational axis of the upper guide roller (17) and is connected with a pivoting drive (19).

4. Apparatus according to one or more of claima 1 to 3, characterized in that the tip of the capture finger (18) is open in the manner of a fork (capture notch 18a) and is furnished with an approach slope (20) at one side.

5. Apparatus according to one or more of claims 1 to 4, characterized in that the tip of the capture finger (18) is constructed in the manner of a barb.

6. Apparatus according to one or more of claims 1 to 5, characterized in that, in the region of the wire portions to be twisted together, bending devices (21 and 22) are disposed, one above and one below the lacing head (12).

7. Apparatus according to one or more of claims 1 to 6, characterized in that the lower guide roller (16) is disposed just above the upper side of the bale (4) which is just about to be pressed and banded.

8. Apparatus according to one or more of claims 1 to 7, characterized in that the lacing head (12) is mounted movable into and out of its working position.

9. Apparatus according to claim 1, characterized by two capture fingers (118) (capture finger pair), associated each with one twist point (109, 110) as twisting tools.

10. Apparatus according to claim 9, characterized in that the capture fingers (118) cooperate with clamping jaws (121, 122).

11. Apparatus according to claim 9 or 10, characterized in that the two capture fingers (118) associated with a twist point (109, 110) each consist of a cylindrical shaft having a capture hook (125) and are disposed parallel to each other to rotate each about its longitudinal axis and to displace each in the direction of its longitudinal axis.

12. Apparatus according to one or more of claims 9 to 11, characterized by a common twisting drive (129) and common displacement or capture drive (119) for each capture finger pair.

13. Apparatus according to one or more of claims 9 to 12, characterized by a yoke (124), possessing a clamping jaw (121, 122) for each capture finger (118) and a cutting blade (123a) disposed in the region between the capture hooks (125), in which yoke the two capture fingers (118) of a capture finger pair are mounted parallel to each other in such a manner that their longitudinal axes lie substantially in the plane defined by the wires (108b, 115) to be twisted together.

14. Apparatus according to one or more of claims 9 to 13, characterized by two axis-parallel bores (135) in the yoke (124) for the capture finger pair.

15. Apparatus according to one or more of claims 9 to 14, characterized in that each capture hook (125) possesses a forward surface (120) chamfered on one side as approach slope, the offset of which is compensated by length and direction of each hook opening (127) in such a manner that the guided wires (108b, 115) lie virtually in the axis of the capture finger.

16. Apparatus according to one or more of claims 9 to 15, characterized by a substantially cylindrical roller (126) for guiding the wires (108b, 115) in the hook opening (127) of each capture finger (118).

17. Apparatus according to one or more of claims 9 to 16, characterized in that the clamping jaws (121; 122) associated with each of the individual capture fingers (118) cooperate with the wire guide (126) in the hook opening (127) as clamping device, and the cutting blade (123a) disposed on the clamping jaw (121), together with the counter-blade (123b) mounted on one of the capture finger tips (125), constitute the cutting device (123).

18. Apparatus according to one or more of claims 9 to 17, characterized in that the lacing head (112) is able to travel between a basic position (Fig. 5) and a capture position (Fig. 6).

19. Apparatus according to one or more of claims 9 to 18, characterized in that the basic position (Fig. 5 and 7) at the same time is the clamping, cutting and twisting position.

- 1/9 -

_Fig.1_

Fig. 2

0 084 680

_Fig. 3_

18 a

18

18 b

20

8a

8b

18 b

20

18 a

18

_Fig. 4_

_Fig. 5_

_Fig.6_

Fig.7

0 084 680

*Fig. 8*

0 084 680

*Fig. 9*

(115)

108 b

126   121

125

123 b

123 a

122

112   135   124   118   132

137

135   118

0 084 680

_Fig.10_